# EUROPÄISCHE PATENTSCHRIFT

(11) **EP 1 000 517 B1**
(45) Veröffentlichungstag und Bekanntmachung des Hinweises auf die Patenterteilung: **01.12.2004**
(21) Anmeldenummer: 99936306.2
(22) Anmeldetag: 25.05.1999
(51) Int. Cl.: H04Q 7/32

(54) **VERFAHREN ZUR STEUERUNG EINES TEILNEHMERIDENTITÄTSMODULS (SIM) IN MOBILFUNKSYSTEMEN**
METHOD FOR CONTROLLING A SUBSCRIBER IDENTITY MODULE (SIM) IN MOBILE RADIO TELEPHONE SYSTEMS
PROCEDE DE COMMANDE D'UN MODULE D'IDENTIFICATION D'ABONNE (SIM) DANS DES SYSTEMES DE RADIOTELEPHONIE MOBILES

(30) Priorität: 26.05.1998 DE 19823532
(43) Veröffentlichungstag der Anmeldung: 17.05.2000
(73) Patentinhaber: T-Mobile Deutschland GmbH, 53227 Bonn (DE)
(72) Erfinder: DUPRE, Michael, D-53757 Sankt Augustin (DE)
(74) Vertreter: Riebling, Peter, Dr.-Ing.
(86) Internationale Anmeldenummer: PCT/DE1999/001531
(87) Internationale Veröffentlichungsnummer: WO 1999/062275

(56) Entgegenhaltungen:
- EP-A- 0 757 502
- WO-A-92/12584

## Beschreibung

Die Erfindung betrifft ein Verfahren zur Steuerung eines Teilnehmeridentitätsmoduls (SIM) in Mobilfunksystemen.

Mobilstationen bestehen aus einem Mobilfunkendgerät, das für alle funk- und übertragungstechnischen Aufgaben zuständig ist, und einem damit verbindbaren Teilnehmeridentitätsmodul (SIM: Subscriber Identity Module), meist in Form einer Chipkarte, welches das Teilnehmerverhältnis zum Mobilfunknetzbetreiber begründet. Auf der SIM werden wichtige individuelle Teilnehmerdaten gespeichert, die eine Nutzung der Mobilfunkdienste ermöglichen. Die SIM enthält die Mobilteilnehmerkennung (IMSI), den individuellen und geheimen Teilnehmerschlüssel (Ki), einen Authentifikationsalgorithmus (A3), Datenschlüsselgenerierungsalgorithmus (A8), eine persönliche Geheimzahl (PIN) und andere permanente sowie temporäre Daten.
Die SIMs werden in einem sogenannten Personalisierungszentrum des Mobilfunknetzbetreibers mit IMSI, Ki, etc. vorpersonalisiert und an den Teilnehmer ausgehändigt.
Eine Änderung der permanent auf der SIM gespeicherten Daten, z.B. für update-Prozeduren oder sicherheitsrelevante Verbesserungen, ist danach im allgemeinen nicht mehr oder höchstens noch im Personalisierungszentrum möglich. Sollen die SIM-Daten einer Vielzahl von Teilnehmern geändert werden, so ist dies sehr arbeits- und kostenintensiv.

Die EP 0 757 502 Al offenbart ein Verfahren zur Steuerung eines Teilnehmeridentitätsmoduls im Mobilfunksystemen, wobei das Mobilfunknetz einen oder mehrere bestimmte Steuerwerte an das Teilnehmeridentitätsmodul sendet, die bestimmte Aktionen oder Vorgänge innerhalb des Teilnehmeridentifikationsmoduls auslösen. Hierbei werden als Steuerwerte bestimmte Nachrichten (Security Requenst und Security Response) verwendet, die einen entsprechenden Befehl enthalten. Zwar werden auch dort Zufallswerte zur regulären Authentifikation an das Teilnehmeridentitätsmodul gesendet, diese dienen jedoch nicht als Steuerwerte für das Teilnehmeridentitätsmodul.

Die Aufgabe der Erfindung liegt darin, ein Verfahren zur Steuerung eines Teilnehmeridentitätsmoduls (SIM) in Mobilfunksystemen vorzuschlagen, welches hohe Sicherheitsanforderungen erfüllt und einfach realisiert werden kann.

Diese Aufgabe wird durch die kennzeichnenden Merkmale der Patentansprüche 1 und 10 gelöst.

Die Erfindung beruht darauf, daß das Mobilfunknetz einen oder mehrere bestimmte Steuerwerte an das Teilnehmeridentitätsmodul sendet, die bestimmte Aktionen oder Vorgänge innerhalb des Teilnehmeridentifikationsmoduls auslösen, wobei als Steuerwerte bestimmte, vom Mobilfunknetz für die reguläre Authentifikation an das Teilnehmeridentitätsmodul gesendete Zufallswerte (Steuer-RANDs) verwendet werden.

Dabei erfolgt im Teilnehmermodul vor Auslösung einer Aktion oder eines Vorgangs eine Überprüfung dieser empfangenen Steuerwerte (Steuer-RANDs), indem die Steuerwerte mit bestimmten, auf der SIM verfügbaren Vergleichswerten (Vergleichs-RANDs) verglichen werden. Auf der SIM ist dazu mindestens ein Vergleichswert verfügbar, der entweder als feste Größe gespeichert ist, oder berechnet werden kann. Kartenindividuelle Steuer-/Vergleichs-RANDs ergeben sich z.B. dadurch, daß sie anhand der auf der SIM implementierten Sicherheitsalgorithmen A3/A8 als Funktion vom geheimen Schlüssel Ki und/oder weiteren fest abgelegten Größen Z ermittelt werden.
Um den Vergleich schnell durchführen zu können, kann der Vergleichswert auf der SIM gespeichert werden.

Es ist ferner vorgesehen, daß für jede SIM mehrere Steuerwerte reserviert sind, die jeweils eine bestimmte Aktion oder einem bestimmten Vorgang auf der SIM auslösen. Eine Reihe von zulässigen Steuerwerten werden an einer geeigneten Stelle des Mobilfunknetzes, z.B. im Authentikationszentrum (AC), vorgehalten, wobei diese Steuerwerte jeweils einer bestimmen SIM und bestimmten auszulösenden Aktionen zugeordnet sind.

Zur Erhöhung der Sicherheit im Mobilfunknetz können z.B. auf der SIM mehrere verschiedene Sicherheitsalgorithmen A3/A8 abgelegt sein, zwischen welchen durch Empfang eines entsprechenden Steuerwertes umgeschaltet werden kann.

Ebenso ist es möglich, daß auf der SIM-Karte mehrere geheime Schlüssel Ki abgelegt sind, oder aus einem dort abgelegten Ki hergeleitet werden können, zwischen welchen durch Empfang eines entsprechenden Steuerwertes umgeschaltet werden kann.

Jede auszulösende Aktion oder Vorgang kann dabei nicht nur durch einen einzigen Steuer-RAND, sondern auch durch einen Steuer-RAND aus einer Gruppe von Steuer-RANDs ausgelöst werden. Dabei wird nur ein Teil des Steuer-RAND benutzt, so daß sich aufeinanderfolgende Steuer-RANDs voneinander unterscheiden, jedoch die Steuerbits gemeinsam haben.

Vorteil der Erfindung ist, daß für eine derartige "Fernsteuerung" von Aktionen oder Vorgängen auf der SIM keine zusätzlichen Steuerwerte übertragen werden müssen, die ansonsten leicht identifiziert und mißbraucht werden könnten. Der Einsatz einer bei jeder Authentikation übertragenen Zufallszahl als Steuerwert macht diesen als solchen nicht erkennbar. Die Steuerwerte erscheinen als "gewöhnliche" RAND-Werte die vom Netz zur Authentikation an die SIM gesendet werden. Auch ist keine Änderung der GSM-Protokolle notwendig.

Nachfolgend wird die Erfindung anhand eines ,Ausführungsbeispiels näher erläutert. Dabei gehen weitere Merkmale und Vorteile der Erfindung hervor.

Der Authentikationsvorgang innerhalb von GSM-Mobilfunksystemen geschieht dadurch, daß das Authentikationszentrum AC des Mobilfunknetzes eine Zufallszahl RAND an die SIM schickt, und diese mittels eines Algorithmus A3/A8 und des geheimen Schlüssels Ki ein Ergebnis SRES' = A3/A8(Ki,RAND) berechnet und an das AC zurückschickt. Das AC ist ebenfalls in Kenntnis des geheimen Schlüssels Ki. Es berechnet nach dem gleichen Algorithmus A3/A8 einen Wert SRES und vergleicht diesen Wert mit dem von der SIM gelieferten Wert SRES'. Bei Übereinstimmung der beiden Werte gilt die SIM als authentisiert.

Die SIM-Karte besitzt nun zwei verschiedene, oder auch mehrere Algorithmen A3/A8, die die gleichen Schnittstellen nach außen besitzen, bei gleicher Länge von RAND, Ki und SRES. Dabei kann die SIM nur einen Ki, oder je Algorithmus A3/A8 einen eigenen Ki besitzen.

Möchte der Netzbetreiber z.B. aus Sicherheitsgründen den verwendeten Algorithmus A3/A8 wechseln, kann er das Authentikationszentrum AC veranlassen, eine spezielle Zufallszahl RAND zu erzeugen, welche gleichzeitig einen erfindungsgemässen Steuerwert darstellt, der im folgenden auch als Steuer-RAND bezeichnet wird. Der Steuer-RAND löst ein Umschalten des Algorithmus A3/A8 in der SIM-Karte aus. Die vom AC für die Authentikation berechneten Werte für SRES basieren bereits auf den neuen Algorithmus der auf den Steuer-RAND angewendet wird. Der Steuer-RAND dient also zum einen zur regulären Authentikation der SIM und zum zweiten zur Umschaltung der verwendeten Verschlüsselungsalgorithmen A3/A8.

Ein RAND, der als Steuer-RAND dient, sollte kartenindividuell und sicher sein. Daher kann z.B. der Wert, der sich aus A3/A8 (Ki,Ki) ergibt, als Steuer-RAND verwendet werden. Der Wert A3/A8(Ki,Ki) ist kartenindividuell und niemandem bekannt, der den Ki nicht kennt. Zur Berechnung einer Zufallszahl RAND für Steuerfunktionen wird also der Ki einsetzt, der nur der SIM und dem Netz bekannt ist. Es ist ausreichend, nur mit einem Teil dieses Wertes Ki zu steuern, um nicht alle Bits dieses Wertes verwenden zu müssen. Ein Steuer-RAND ist dann z.B. jeder RAND, dessen erste n Bits mit denen des Wertes A3/A8(Ki,Ki) übereinstimmen.

Der Wert A3/A8(Ki,Ki) kann bereits bei der Personalisierung der Karte berechnet werden, und sicher abgespeichert werden. Vor jeder Authentikation werden bei dem vom AC gesendeten RAND die nicht verwendeten Bits ausmaskiert und das Ergebnis mit dem auf der SIM berechneten und evtl. dort sicher abgelegten Wert des Steuer-RANDs verglichen. Stimmt der durch die Karte berechnete Vergleichswert mit dem empfangenen Steuer-RAND überein, so ist der Steuer-RAND authentisiert und kann die zugeordneten Aktionen oder Vorgänge auf der SIM auslösen. Ist der Algorithmus A3/A8 bereits gewechselt, erfolgt eine normale Authentikationsprozedur. Ein nochmals empfangener Steuer-RAND der gleichen Steuer-RAND-Gruppe wird nicht mehr als solcher berücksichtigt.

In der Regel erzeugt das AC die an die SIM gesendete Zufallszahl RAND zur Authentifikation rein zufällig. Sofern die Anzahl n der verwendeten Bits eines Steuer-RANDS groß genug ist, kann darauf verzichtet werden zu prüfen, ob die zufällig erzeugte RAND ein reserviertes Steuer-RAND ist oder nicht. Wird der Wert n sehr groß gewählt, dann ist es unwahrscheinlich, daß das AC für die alltägliche Authentikation zufällig ein RAND erzeugt, welches mit einem reservierten Steuer-RAND übereinstimmt.
Soll der Algorithmus gewechselt werden, sollte das AC die Authentikation mehrmals hintereinander mit Steuer-RANDs vornehmen, um auch bei Verbindungsproblemen sicher zu sein, daß die SIM dieses Steuer-RAND auch erhält.

Erfolgt eine Authentifikation über eine Besucherdatei VLR, so wird diese erst seine alten, vom HLR erhaltenen Authentikations-Triplets weiter benutzen, und irgendwann auf das vom HLR bzw. AC vorgegebene Steuer-RAND treffen. Dem VLR ist es nicht bekannt, daß es sich um einer Steuer-RAND handelt. Erst dann wird die SIM den Algorithmus umschalten. Der Umschaltzeitpunkt in der SIM liegt daher u.U. deutlich später als der Umschaltzeitpunkt im AC. Wechselt der Teilnehmer innerhalb seines Heimatnetzes das VLR, werden jedoch die im letzten VLR abgelegten RAND-/SRES-Werte übernommen und weiterverwendet. Ein Wechsel oder mehrfacher Wechsel des VLR ist daher nicht kritisch und verzögert die Umschaltung des Algorithmus in der SIM nicht.

Nach dem gleichen Verfahren kann in der SIM auch der geheime Schlüssel Ki gewechselt werden. Dazu kann der neue Ki bereits auf der SIM sicher abgespeichert sein oder aber aus dem alten Ki durch ein definiertes Berechnungsverfahren abgeleitet werden.

Die zur Umschaltung des Ki benötigten Steuer-RANDS unterscheiden sich in ihrem Wert von den Steuer-RAND für die Umschaltung der Algorithmen A3/A8 und können sich z.B. nach einem anderen mathematischen Verfahren ableiten. Ein Steuer-RAND kann aus den ersten n Bits des Ergebnisses aus A3/A8(Ki,Ki XOR Z) bestehen, wobei Z ein beliebiger jedoch fester Wert ist, der auf der SIM abgelegt ist.

Das AC muß bereits nach der Erzeugung des ersten Steuer-RAND mit dem neuen Ki Wert weiterarbeiten und auch die SIM benutzt den neuen Ki bereits für die Authentikation, die ebenfalls mit dem empfangenen Steuer-RAND durchgeführt werden soll.

## Patentansprüche

1. Verfahren zur Steuerung eines Teilnehmeridentitätsmoduls SIM in Mobilfunksystemen, bei dem das Mobilfunknetz einen oder mehrere bestimmte Steuerwerte an das Teilnehmeridentitätsmodul sendet, die bestimmte Aktionen oder Vorgänge innerhalb des Teilnehmeridentitätsmoduls auslösen,
**dadurch gekennzeichnet,**
**dass** als Steuerwerte spezielle Zufallszahlen in Form von Steuer-RANDs verwendet werden, wobei vom Teilnehmeridentitätsmodul geprüft wird, ob es sich bei den empfangenen Steuerwerten um solche speziellen Steuer-RANDs handelt, die dann sowohl zur Authentifikation des Teilnehmeridentitätsmoduls gegenüber dem Mobilfunknetz als auch zur Auslösung der bestimmten Aktionen oder Vorgänge innerhalb des Teilnehmeridentitätsmoduls verwendet werden.

2. Verfahren nach Anspruch 1, **dadurch gekennzeichnet, daß** eine Gruppe von verschiedenen Steuer-RANDs für die Auslösung einer Aktion oder eines Vorgangs benutzt werden.

3. Verfahren nach Anspruch 1, **dadurch gekennzeichnet, daß** ein Steuer-RAND mehrere verschiedene Aktionen oder Vorgänge auslöst.

4. Verfahren nach einem der Ansprüche 1 - 3, **dadurch gekennzeichnet, daß** im Teilnehmeridentitätsmodul vor Auslösung einer Aktion oder eines Vorgangs eine Überprüfung dieser empfangenen Steuer-RANDs erfolgt, indem die Steuer-RANDs mit bestimmten, auf der SIM verfügbaren Vergleichswerten in Form von Vergleichs-RANDs verglichen werden.

5. Verfahren nach einem der Ansprüche 1 - 4, **dadurch gekennzeichnet, daß** die Vergleichs-RANDs fest auf der SIM gespeichert sind.

6. Verfahren nach einem der Ansprüche 1 - 5, **dadurch gekennzeichnet, daß** die Vergleichs-RANDs mittels auf der SIM abgelegten Daten berechnet werden.

7. Verfahren nach einem der Ansprüche 1 - 6, **dadurch gekennzeichnet, daß** ein Vergleichs-RAND aus den auf der SIM implementierten Sicherheitsalgorithmen A3/A8 als Funktion vom geheimen Schlüssel Ki und/oder weiteren fest abgelegten Größen Z ermittelt wird.

8. Verfahren nach einem der Ansprüche 1 - 7, **dadurch gekennzeichnet, daß** für jede SIM mehrere Steuer-RANDs reserviert sind, die jeweils eine bestimmten Aktion oder einem bestimmten Vorgang auf der SIM auslösen.

9. Verfahren nach einem der Ansprüche 1 - 8, **dadurch gekennzeichnet, daß** an einer geeigneten Stelle des Mobilfunknetzes eine Reihe von zulässigen Steuer-RANDs vorgehalten wird, die jeweils bestimmen SIMs und bestimmten Aktionen zugeordnet sind.

10. Teilnehmeridentitätsmodul SIM zur Verwendung für das Verfahren nach den Ansprüchen 1 bis 9, mit Mitteln zum Auslösen bestimmter Aktionen oder Vorgänge im Teilnehmeridentitätsmodul nach Empfang einer oder mehrerer bestimmter Steuerwerte von einem Mobilfunknetz,
**dadurch gekennzeichnet,**
**dass** auf diesem Teilnehmeridentitätsmodul mindestens ein Vergleichswert in Form eines Vergleichs-RAND sicher abgelegt ist oder mittels auf diesem Teilnehmeridentitätsmodul abgelegten Daten berechnet werden kann,
**dass** als Steuerwerte spezielle Zufallszahlen in Form von Steuer-RANDs verwendet werden, die sowohl zur Authentifikation des Teilnehmeridentitätsmoduls gegenüber dem Mobilfunknetz als auch zur Auslösung der bestimmten Aktionen oder Vorgänge innerhalb des Teilnehmeridentitätsmoduls verwendet werden,
**dass** im Teilnehmeridentitätsmodul Mittel vorgesehen sind zum Überprüfen der empfangenen Steuer-RANDs vor Auslösung einer Aktion oder eines Vorgangs durch Vergleich der Steuer-RANDs mit den auf der SIM verfügbaren Vergleichs-RANDs.

11. Teilnehmeridentitätsmodul nach Anspruch 10, **dadurch gekennzeichnet, dass** im Teilnehmeridentitätsmodul Mittel vorgesehen sind zum Ermitteln eines Vergleichs-RAND aus den auf der SIM implementierten Sicherheitsalgorithmen A3/A8 als Funktion vom geheimen Schlüssel Ki und/oder weiteren fest abgelegten Größen Z.

12. Teilnehmeridentitätsmodul nach einem der Ansprüche 10 oder 11, **dadurch gekennzeichnet, dass** auf der SIM mehrere verschiedene Sicherheitsalgorithmen A3/A8 abgelegt sind und das Teilnehmeridentitätsmodul über Mittel zum Umschalten zwischen diesen verschiedenen Sicherheitsalgorithmen A3/A8 durch Empfang eines entsprechenden Steuer-RANDs verfügt.

13. Teilnehmeridentitätsmodul nach einem der Ansprüche 10 oder 11, **dadurch gekennzeichnet, dass** auf der SIM mehrere geheime Schlüssel Ki abgelegt sind, oder aus einem dort abgelegten Ki hergeleitet werden und das Teilnehmeridentitätsmodul über Mittel zum Umschalten zwischen diesen verschiedenen Schlüsseln Ki durch Empfang eines entsprechenden Steuer-RANDs verfügt.

## Claims

1. Method for the control of a subscriber identity module SIM in mobile telephone systems, in which the mobile telephone network sends one or more given control values to the subscriber identity module, which trigger given actions or operations within the subscriber identity module, **characterised in that** special random numbers in the form of control RANDs are used as control values, wherein it is checked by the subscriber identity module whether the control values received are those special control RANDs which are then used both for authentication of the subscriber identity module in relation to the mobile telephone network and for triggering the given actions or operations within the subscriber identity module.

2. Method according to claim 1, **characterised in that** a group of different control RANDs are used for triggering an action or operation.

3. Method according to claim 1, **characterised in that** a control RAND triggers several different actions or operations.

4. Method according to one of claims 1 - 3, **characterised in that** in the subscriber identity module, before triggering an action or operation, checking of these control RANDs received is effected by comparing the control RANDs with given reference values available on the SIM in the form of reference RANDs.

5. Method according to one of claims 1 - 4, **characterised in that** the reference RANDs are permanently stored on the SIM.

6. Method according to one of claims 1 - 5, **characterised in that** the reference RANDs are calculated by means of data filed on the SIM.

7. Method according to one of claims 1 - 6, **characterised in that** a reference RAND is determined from the security algorithms A3/A8 implemented on the SIM as a function of the secret code Ki and/or other permanently filed quantities Z.

8. Method according to one of claims 1 - 7, **characterised in that** for each SIM are reserved several control RANDs which in each case trigger a given action or a given operation on the SIM.

9. Method according to one of claims 1 - 8, **characterised in that** at a suitable location of the mobile telephone network is kept available a number of permitted control RANDs which are in each case assigned to given SIMs and given actions.

10. Subscriber identity module SIM for use for the method according to claims 1 to 9, with means for triggering given actions or operations in the subscriber identity module upon reception of one or more given control values from a mobile telephone network, **characterised in that** on this subscriber identity module at least one reference value in the form of a reference RAND is securely filed or can be calculated by means of data filed on this subscriber identity module,
**in that** special random numbers in the form of control RANDs are used as control values, which are used both for authentication of the subscriber identity module in relation to the mobile telephone network and for triggering the given actions or operations within the subscriber identity module,
**in that** in the subscriber identity module are provided means for checking the received control RANDs before triggering an action or operation by comparison of the control RANDs with the reference RANDs available on the SIM.

11. Subscriber identity module according to claim 10, **characterised in that** in the subscriber identity module are provided means for determining a reference RAND from the security algorithms A3/A8 implemented on the SIM as a function of the secret code Ki and/or other permanently filed quantities Z.

12. Subscriber identity module according to one of claims 10 or 11, **characterised in that** several different security algorithms A3/A8 are filed on the SIM and the subscriber identity module has means for switching between these different security algorithms A3/A8 by reception of a corresponding control RAND.

13. Subscriber identity module according to one of claims 10 or 11, **characterised in that** several secret codes Ki are filed on the SIM or derived from a Ki filed there, and the subscriber identity module has means for switching between these different codes Ki by reception of a corresponding control RAND.

## Revendications

1. Procédé pour commander un module d'identification d'abonné SIM dans des systèmes radiotéléphoniques mobiles, selon lequel le réseau radiotéléphonique mobile envoie au module d'identification d'abonné une ou plusieurs valeurs de commande définies qui déclenchent dans ledit module des actions ou opérations définies,
**caractérisé en ce qu'**on utilise comme valeurs de commande des nombres aléatoires spéciaux en forme de valeurs de commande RAND, le module d'identification d'abonné vérifiant si les valeurs de commande reçues sont bien des valeurs de commande spéciales RAND de ce type, qui sont alors utilisées aussi bien pour authentifier le module d'identification d'abonné auprès du réseau radiotéléphonique mobile que pour déclencher à l'intérieur dudit module les actions ou opérations définies.

2. Procédé selon la revendication 1, **caractérisé en ce qu'**on utilise un groupe de valeurs de commande RAND différentes pour déclencher une action ou une opération.

3. Procédé selon la revendication 1, **caractérisé en ce qu'**une valeur de commande RAND déclenche plusieurs actions ou opérations différentes.

4. Procédé selon l'une des revendications 1 à 3, **caractérisé en ce qu'**une vérification de ces valeurs de commande RAND reçues a lieu dans le module d'identification d'abonné avant le déclenchement d'une action ou d'une opération, grâce au fait que les valeurs de commande RAND sont comparées à des valeurs comparatives définies qui sont disponibles sur le module SIM et qui ont la forme de valeurs RAND comparatives.

5. Procédé selon l'une des revendications 1 à 4, **caractérisé en ce que** les valeurs RAND comparatives sont mises en mémoire définitivement sur le module SIM.

6. Procédé selon l'une des revendications 1 à 5, **caractérisé en ce que** les valeurs RAND comparatives sont calculées à l'aide de données mémorisées sur le module SIM.

7. Procédé selon l'une des revendications 1 à 6, **caractérisé en ce qu'**une valeur RAND comparative est déterminée à partir des algorithmes de sécurité A3/A8 qui sont mis en oeuvre sur le module SIM, comme fonction du code secret Ki et/ou d'autres grandeurs Z mémorisées définitivement.

8. Procédé selon l'une des revendications 1 à 7, **caractérisé en ce que** pour chaque module SIM sont réservées plusieurs valeurs de commande RAND qui déclenchent chacune sur ledit module SIM une action ou une opération définie.

9. Procédé selon l'une des revendications 1 à 8, **caractérisé en ce qu'**à un endroit approprié du réseau radiotéléphonique mobile sont présentées une série de valeurs de commande RAND autorisées qui sont affectées respectivement à des modules SIM définis et à des actions définies.

10. Module d'identification d'abonné SIM à utiliser pour le procédé selon les revendications 1 à 9, comportant des moyens pour déclencher dans ledit module des actions ou des opérations définies, après réception d'une ou plusieurs valeurs de commande définies provenant d'un réseau radiotéléphonique mobile,
**caractérisé en ce qu'**au moins une valeur comparative en forme de valeur RAND comparative est mémorisée de manière sûre sur ce module d'identification d'abonné ou peut être calculée à l'aide de données mises en mémoire sur ce module,
**en ce qu'**on utilise comme valeurs de commande des nombres aléatoires spéciaux sous la forme de valeurs de commande RAND, qui sont utilisés aussi bien pour authentifier le module d'identification d'abonné auprès du réseau radiotéléphonique mobile que pour déclencher à l'intérieur du module d'identification d'abonné les actions ou opérations définies,
**en ce qu'**il est prévu dans le module d'identification d'abonné des moyens pour vérifier avant le déclenchement d'une action ou d'une opération définies les données de commande RAND reçues, grâce à une comparaison desdites valeurs de commande RAND avec des valeurs RAND comparatives disponibles sur le module SIM.

11. Module d'identification d'abonné selon la revendication 10, **caractérisé en ce qu'**il est prévu dans ledit module d'identification d'abonné des moyens pour déterminer une valeur RAND comparative à partir des algorithmes de sécurité A3/A8 mis en oeuvre sur le module SIM, comme fonction du code secret Ki et/ou d'autres grandeurs Z mémorisées définitivement.

12. Module d'identification d'abonné selon la revendication 10 ou 11, **caractérisé en ce que** plusieurs algorithmes de sécurité A3/A8 différents sont mémorisés sur le module SIM et celui-ci dispose de moyens pour passer de l'un à l'autre de ces différents algorithmes de sécurité A3/A8 grâce à la réception d'une valeur de commande RAND correspondante.

13. Module d'identification d'abonné selon la revendication 10 ou 11, **caractérisé en ce que** plusieurs codes secrets Ki sont mémorisés sur le module SIM ou sont dérivés d'un code Ki mémorisé sur celui-ci, et ledit module dispose de moyens pour passer de l'un à l'autre de ces différents codes Ki grâce à la réception d'une valeur de commande RAND correspondante.
